(19) Europäisches Patentamt
European Patent Office
Office européen des brevets

(11) Veröffentlichungsnummer: **0 252 360 B1**

# (12) EUROPÄISCHE PATENTSCHRIFT

(45) Veröffentlichungstag der Patentschrift: **17.07.91**

(51) Int. Cl.$^5$: **G11B 7/24**

(21) Anmeldenummer: **87108939.7**

(22) Anmeldetag: **23.06.87**

## (54) Optisches Aufzeichnungsmedium.

(30) Priorität: **03.07.86 DE 3622294**

(43) Veröffentlichungstag der Anmeldung:
**13.01.88 Patentblatt 88/02**

(45) Bekanntmachung des Hinweises auf die Patenterteilung:
**17.07.91 Patentblatt 91/29**

(84) Benannte Vertragsstaaten:
**CH DE FR GB IT LI**

(56) Entgegenhaltungen:
**GB-A- 2 066 489**

(73) Patentinhaber: **BASF Aktiengesellschaft**
**Carl-Bosch-Strasse 38**
**W-6700 Ludwigshafen(DE)**

(72) Erfinder: **Aldag, Reinhard, Dr.**
**Gunterstrasse 22**
**W-6700 Ludwigshafen(DE)**
Erfinder: **Neumann, Peter, Dr.**
**Franz-Schubert Strasse 1**
**W-6908 Wiesloch(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

## Beschreibung

Optische Aufzeichnungsträger/Aufzeichnungsmedien zur Speicherung von Daten sind bekannt. Das Aufzeichnen der Daten erfolgt durch Licht bestimmter Wellenlänge und Intensität oder mit anderen geeigneten energiereichen Strahlen. Durch Absorption der Strahlung tritt an der bestrahlten Stelle lokal Erwärmung ein. Dabei kann in Abhängigkeit von der Art der Schicht der Farbstoff verfärbt oder zerstört (entfärbt) werden. In der Oberfläche des Trägers können an der bestrahlten Stelle durch Verdampfen, Erweichen und/oder Schmelzen Vertiefungen erzeugt werden. Beim Abtasten des Trägers tritt dann an den "beschriebenen" Stellen eine Änderung der Intensität des reflektierten Lichtes ein.

In der US-PS 4 097 895 wird ein Aufzeichnungsträger beschrieben, der auf einem Träger eine Schicht aus lichtrefelktierenden Material, z.B. Aluminium oder Gold, aufweist. Letztere ist mit einer lichtabsorbierenden Schicht, z.B. Fluoreszein, bedeckt. Dieser Aufzeichnungsträger kann mit Licht eines Argonlasers beschrieben und gelesen werden. Die Dicke der lichtabsorbierenden Schicht wird so gewählt, daß die Struktur ein minimales Reflexionsvermögen besitzt. Ein auffallender Lichtstrahl löst die absorbierende Schicht ab, verdampft oder schmilzt sie, so daß ein Loch entsteht, in dem die lichtreflektierende Schicht freigelegt ist. Nach der Aufzeichnung resultiert für die Intensität des benutzten Lichts ein Unterschied zwischen dem minimalen Reflexionsvermögen der lichtabsorbierenden Schicht und dem höheren Reflexionsvermögen der lichtreflektierenden Schicht. Wenn das lichtreflektierende Material als dünne Schicht auf einem nur wenig wärmeleitenden Substrat aufgebracht ist, ist der Energieverlust sowohl bei der Reflexion an der dünnen absorbierenden Schicht als auch wegen der geringen Wärmeleitung in der reflektierenden Schicht sehr klein. Die aus dem Lichtstrahl absorbierte Energie wird also auf dem sehr dünnen Film konzentriert.

Ein ähnliches Prinzipt liegt auch den Speichermedien zugrunde, bei denen andere lichtabsorbierende Materialien Verwendung finden.

Aus der US-PS 4 242 689 ist ein Aufzeichnungsträger bekannt, der Diindenoperylen als lichtabsorbierende Schicht enthält. Dieser Träger kann mit einem Argonlaser beschrieben werden.

Die US-PS 4 415 621 beschreibt Cyaninfarbstoffe, die in Form von dünnen Schichten mit einem Laser der Wellenlänge 488 mm beschreibbar sind.

Aus der EP-A-84 729, der GB-A-2 066 489 bzw. der US-A-4 492 750 sind z.B. auch die Verwendung von Phthalocyaninverbindungen bzw. von Naphthalocyanverbindungen als lichtabsorbierende Mittel in Aufzeichnungsmedien bekannt.

Materialien, die als lichtabsorbierende Schicht des Aufzeichnungsträgers verwendet werden sollen, müssen auf geeignete Träger in Form einer dünnen, glatten Schicht hoher optischer Qualität und vorbestimmter Dicke aufzubringen sein. Die Materialien müssen ferner bei der Wellenlänge der verwendeten Lichtquelle eine hohe Absorption aufweisen, damit die Aufzeichnungsmedien eine möglichst hohe Empfindlichkeit und damit hohe Aufzeichnungsgeschwindigkeit erlauben; d.h. die Aufzeichnungsmedien müssen bei Einstrahlung von auf Brennpunktdurchmesser von weniger als ca. 1 $\mu$m Durchmesser doskussierten Lichtpulsen mit Energien im Nanojoulebereich und darunter ihre optischen Eigenschaften im bestrahlten Bereich in einer der oben beschriebenen Weise ändern.

Bevorzugte Lichtquellen sind pulsbare Halbleiterlaser, die im Bereich von 750 bis 850 nm arbeiten und die sich durch kleine Bauformen auszeichnen.

Die zur Anwendung in diesem Spektralbereich bekannten lichtabsorbierenden Schichten (z.B. DE-A- 29 51 341 oder US-A- 4 241 355) werden z.B. durch Aufdampfen im Hochvakuum auf das Trägermaterial aufgebracht.

Diese Aufdampf-Verfahren erfordern z.T. sehr hohe, das Verdampfungs- und Trägermaterial belastende Temperaturen und sind darüber hinaus im Hinblick auf Verunreinigungen durch Spritzer oder hochgeschleuderte Teilchen aus dem Verdampferschiffchen als problematisch anzusehen.

Demgegenüber bietet die Verwendung von Farbstofflösungen oder -dispersionen zur Herstellung der lichtabsorbierenden Schichten eine Reihe von Vorteilen: Lösungen und Dispersionen sind staubfrei und in hoher Reinheit herzustellen, die Beschichtung kann unter normalen Druck- und Temperaturbedingungen erfolgen.

Aufgabe der vorliegenden Erfindung war es, optische Aufzeichungsmedien mit lichtabsorbierenden Schichten zur Verfügung zu stellen, die diesen Anforderungen genügen, die einfach herzustellen, über lange Zeit stabil, korrosionsfrei und ungiftig sind. Außerdem sollten diese Aufzeichnungsmedien mittels Laser, insbesondere Halbleiter-Laser, beschrieben und gelesen werden können.

Demgemäß wurde ein optisches Aufzeichnungsmedium aus einem Träger und einer lichtabsorbierenden Schicht gefunden, welches dadurch gekennzeichnet ist, daß die lichtabsorbierende Schicht aus mindestens einem Farbmittel der Formel I

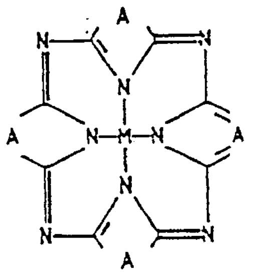

I

besteht oder mindestens ein Farbmittel der Formel I enthält, in der

M für zwei Wasserstoffatome, für Fe, Cu, Co, Ni, Pb, Cr, Mn, VO, TiO, ZrO, Nb, Ta, Pd, $SiCl_2$, Sn oder $SnX_2$, worin:X Cl, Br oder J bedeuten, steht und

A einen bivalenten Rest der Formel II

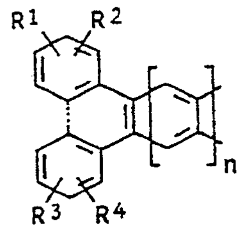

II

bezeichnet, in der

die punktierte Linie keine oder eine Bindung bedeutet, n die Werte 0 oder 1 annehmen kann,

$R^1$, $R^2$, $R^3$ und $R^4$ für den Fall, daß n den Wert 0 annimmt, Wasserstoff, $C_1$-$c_{12}$-Alkyl, Trifluormethyl, Butoxy, $C_1$-$C_{12}$-Alkylthio, Phenyloxy, Phenylthio, Fluor, Chlor, Brom, Nitro, Amino, Mono-$C_1$-$C_{12}$-alkylamino,Di-$C_1$-$C_{12}$-alkylamino, -$SiR_3$ oder -$SnR_3$, worin R für $C_1$-$C_8$-Alkyl steht, sowie

$R^1$, $R^2$, $R^3$ und $R^4$ für den Fall, daß n den Wert 1 annimmt und die punktierte Linie keine Bindung bedeutet, Wasserstoff, $C_1$-$C_{12}$-Alkyl, gegebenfalls durch Alkoxy substituiertes Phenyl, $C_1$-$C_{12}$-Alkoxy, Fluor, Chlor, Brom, Amino, Mono-$C_1$-$C_{12}$-alkyl-amino oder Di-$C_1$-$C_{12}$-alkylamino bedeuten,

und für den Fall, daß n den Wert 1 annimmt und die punktierte Linie eine Bindung bedeutet,

$R^1$ und $R^3$ die letztgenannte Bedeutung besitzen und

$R^2$ und $R^4$ für Wasserstoff stehen.

Die für die erfindungsgemäßen Aufzeichnungsmedien als lichtabsorbierende Schicht verwendeten Farbmittel I weisen eine hohe Absorption bei der Wellenlänge der verwendeten Laser von ca. 600 bis 850 nm auf. Die Farbmittel können auf eine gegebenenfalls verspiegelte Oberfläche eines Glas- oder Kunststoffsubstrates so aufgebracht werden, daß glatte Absorptionsschichten von hoher optischer Qualität entstehen.

Aufgrund der hohen Absorption der Farbstoffe I sind die erfindungsgemäßen Aufzeichnungsmedien sehr empfindlich gegenüber dem Licht der Halbleiter-Laser und somit geeignet, Informationen bei hohem Signal-Rausch-Verhältnis zu speichern bzw. abzugeben. Die Schichten sind gegenüber atmosphärischen Einflüssen und Tageslicht sehr stabil. Die verwendeten Farbmittel sind nicht toxisch.

Für die in den erfindungsgemäßen Aufzeichnungsmedien enthaltenen Farbmittel (Farbstoffe) der Formel I sind solche bevorzugt, in denen M für VO, TiO, ZrO, Pb, Mn, Co, oder Sn steht.

Besonders bevorzugt sind Farbstoffe 1, in denen H für Co, TiO, ZrO, Mn oder Pb steht.

Als bivalente Reste A sind im einzelnen z.B. zu nennen:

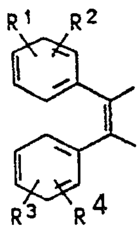 , 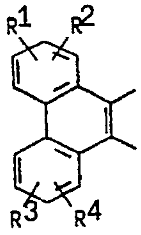 , 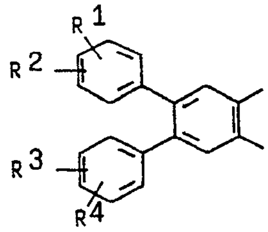 und 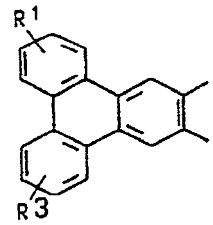

IIa IIb IIc IId

Bevorzugt sind Farbstoffe I, in denen A

1) für Reste der Formel IIa steht, wobei $R^1$, $R^2$; $R^3$ und $R^4$ in 3- und 4- bzw. 3'- und 4' Stellung stehen;

2) für Reste der Formel IIb steht, wobei $R^1$, $R^2$, $R^3$ und $R^4$ in 2-, 3-, 6- oder 7-Position stehen;

3) für Reste der Formel IIc steht, wobei $R^1$, $R^2$, $R^3$ und $R^4$ in m- oder p-Position stehen:

4) für Reste der Formel IId steht, wobei $R^1$ und $R^2$ in den Positionen 1, 4, 6, 7, 10 oder 11 stehen.

Besonders hervorzuheben sind Farbstoffe der Formeln III bis VI, in denen $R^1$ bis $R^4$ die in den Tabellen 1 bis 4 angegebenen Bedeutungen haben.

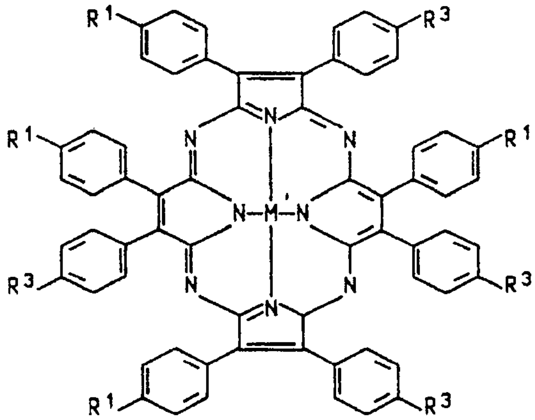

III

Tabelle 1

| Verbindung | M' | $R^1$ | $R^3$ |
|---|---|---|---|
| III 1 | VO | H | H |
| 2 | VO | $t-C_4H_9$ | $t-C_4H_9$ |
| 3 | TiO | H | H |
| 4 | TiO | $t-C_4H_9$ | $t-C_4H_9$ |
| 5 | Mn | H | H |
| 6 | Mn | $t-C_4H_9$ | $t-C_4H_9$ |
| 7 | Pb | H | H |
| 8 | Pb | $t-C_4H_9$ | $t-C_4H_9$ |
| 9 | VO | $O-C_4H_9$ | $O-C_4H_9$ |
| 10 | Mn | $O-C_4H_9$ | $O-C_4H_9$ |
| 11 | VO | $N(CH_3)_2$ | $N(CH_3)_2$ |
| 12 | Mn | $N(CH_3)_2$ | $N(CH_3)_2$ |
| 13 | VO | $N(C_4H_9)_2$ | $N(C_4H_9)_2$ |
| 14 | Mn | $N(C_4H_9)_2$ | $N(C_4H_9)_2$ |

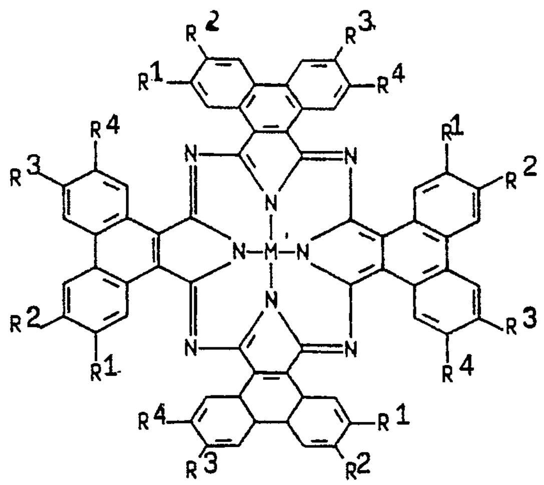

IV

Tabelle 2

| Verbindung | | M' | $R^1$ | $R^2$ | $R^3$ | $R^4$ |
|---|---|---|---|---|---|---|
| IV | 1 | VO | H | H | H | H |
| | 2 | VO | H | t-$C_4H_9$ | t-$C_4H_9$ | H |
| | 3 | TiO | H | H | H | H |
| | 4 | TiO | H | t-$C_4H_9$ | t-$C_4H_9$ | H |
| | 5 | Mn | H | H | H | H |
| | 6 | Mn | H | t-$C_4H_9$ | t-$C_4H_9$ | H |
| | 7 | Pb | H | H | H | H |
| | 8 | Pb | H | t-$C_4H_9$ | t-$C_4H_9$ | H |
| | 9 | VO | $C_4H_9$ | $C_4H_9O$ | $C_4H_9$ | H |
| | 10 | Mn | $C_4H_9$ | $C_4H_9O$ | $C_4H_9$ | H |
| | 11 | VO | H | $(C_4H_9)_2N$ | $(C_4H_9)_2N$ | H |
| | 12 | Mn | H | $(C_4H_9)_2N$ | $(C_4H_9)_2N$ | H |
| | 13 | Pb | H | $(C_4H_9)_2N$ | $(C_4H_9)_2N$ | H |

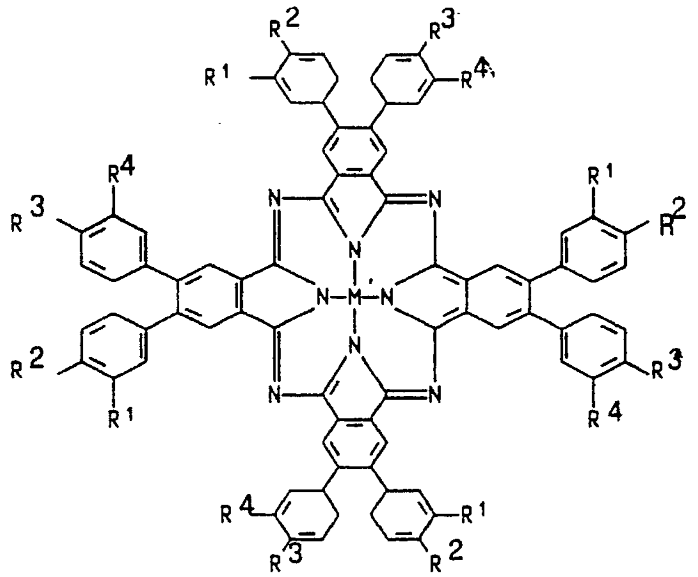

V

Tabelle 3

| Verbindung | M' | $R^1$ | $R^2$ | $R^3$ | $R^4$ |
|---|---|---|---|---|---|
| V 1 | VO | H | H | H | H |
| 2 | Mn | H | $t\text{-}C_4H_9$ | $t\text{-}C_4H_9$ | H |
| 3 | Pb | H | H | H | H |
| 4 | TiO | H | $t\text{-}C_4H_9$ | $t\text{-}C_4H_9$ | H |
| 5 | TiO | H | H | H | H |
| 6 | VO | H | $t\text{-}C_4H_9$ | $t\text{-}C_4H_9$ | H |
| 7 | Mn | H | H | H | H |
| 8 | Pb | H | $t\text{-}C_4H_9$ | $t\text{-}C_4H_9$ | H |
| 9 | VO | $C_2H_5O$ | $C_2H_5O$ | $C_2H_5O$ | $C_2H_5O$ |
| 10 | Mn | $C_2H_5O$ | $C_2H_5O$ | $C_2H_5O$ | $C_2H_5O$ |
| 11 | VO | H | $C_5H_{11}O$ | $C_5H_{11}O$ | H |
| 12 | Mn | H | $C_5H_{11}O$ | $C_5H_{11}O$ | H |

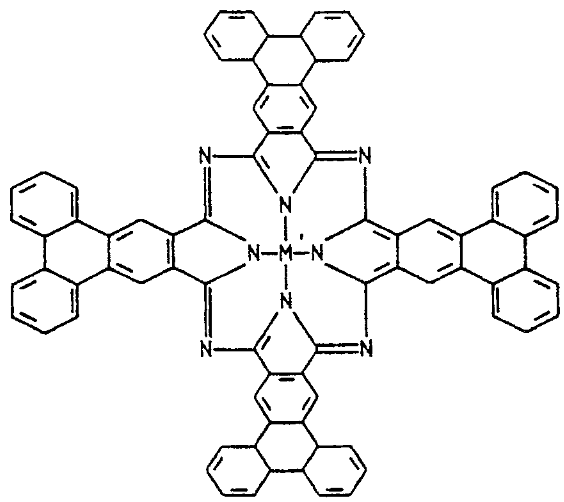

VI

M' = VO
Mn
Pb
TiO

Die Herstellung der Farbmittel ist bekannt oder erfolgt nach an sich bekannten Methoden. Phenanthrocyanine sind beispielsweise in Journal of the Chemical Society, Reihe C, 1970, S. 175, Phenylphorphyrazine in J. Gen. Chem. USSR, Bd. 43, 1973, S. 2010 beschrieben.

Die erfindungsgemäßen Farbstoffe sind in üblichen organischen Lösungsmitteln löslich, soweit es sich um substituierte Vertreter der Grundkörper handelt. Im Falle der unsubstituierten pigmentartigen Porphyrazine kommen ultrafeine Dispersionen mit Partikelgrößen von <0,1 µm zur Anwendung.

Der Aufbau der Aufzeichnungsmedien ist an sich bekannt. Als Träger kommen Platten oder Scheiben aus Glas oder Kunststoff, insbesondere Polymethylmethacrylat (PMMA) oder Polycarbonat (PC) oder auch Polystyrol (PS) in Betracht.

Hinter der lichtabsorbierenden Schicht kann gegebenenfalls eine relfektierende Schicht vorhanden sein. Der nicht absorbierte Teil des eingestrahlten Lichtes wird dann reflektiert und durchwandert erneut die farbige Schicht.

Dabei soll es nach dem Stand der Technik (Bell, Spong; IEEE J. of Quantum Electronics Vol. QE-14 (1978), 7, S. 490; RCA-Reviews 40 (1979), S. 345) vorteilhaft sein, in diesen Fällen der Farbstoffschicht die Dicke $\lambda/4$ ($\lambda$ = Wellenlänge des eingestrahlten Lichtes) zu geben, da durch Interferenzeffekte eine zusätzliche Schwächung des eingestrahlten Lichts erreicht wird. Es wurde jedoch gefunden, daß man auch mit Schichtdicken, die deutlich unter $\lambda/4$ liegen, sehr empfindliche Aufzeichnungsträger erhält.

Die Reflektor-Schicht soll hinsichtlich ihrer Zusammensetzung und Dicke so beschaffen sein, daß sie das zur Aufzeichnung und zur Abtastung verwendete Licht möglichst vollständig reflektiert. Im Hinblick auf eine hohe Aufnahmeempfindlichkeit ist eine geringe Wärmeleitfähigkeit vorteilhaft.

Träger bzw. die lichtreflektierende Schicht müssen eine optisch glatte, ebene Oberfläche aufweisen und an der Oberfläche so beschaffen sein, daß die absorbierende Schicht darauf haftet.

Geeignete lichtreflektierende Materialien sind z.B. Aluminium, Rhodium, Gold, Zinn, Blei, Wismut, Kupfer und dielektrische Spiegel. Die Beschichtung mit diesen Materialien erfolgt durch Aufdampfen im Vakuum.

Auf eine Reflektorschicht kann gegebenenfalls verzichtet werden.

Die Belichtung kann auch durch den transparenten Träger erfolgen. In diesem Fall ist dann die Schichtfolge: Substrat/Absorberschicht/Reflektor. Zur Signalverbesserung kann wahlweise zwischen Substrat und dem Reflektor noch eine Zwischenschicht aufgebracht werden. Für diese Schicht sind SiO, $SiO_2$, $MgF_2$, $Al_2O_3$ oder Mischungen davon sowie org. Kunststoffmaterialien geeignet.

Das Aufbringen der Farbstoffe (I) kann durch Aufschleudern, Aufrakeln oder Tauchen erfolgen unter Verwendung von in organischen Lösungsmitteln gelöstem oder dispergiertem Farbstoff. Gegebenenfalls enthalten diese Lösungsmittel Bindemittel. Das Aufbringen von metallischen Reflexionsschichten erfolgt

durch Aufdampfen oder Aufsputtern im Vakuum.

Je nach Systemaufbau wird zuerst der Farbstoff und dann die reflektierende Schicht aufgebracht oder umgekehrt verfahren. Auf das Aufbringen einer reflektierenden Schicht kann gegebenenfalls verzichtet werden.

Für das Aufbringen der Farbstoff enthaltenden Schichten aus einer Lösung oder Dispersion bereitet man in einem geeigneten Lösungsmittel, wie Methylenchlorid, Chloroform, Aceton, Methylethylketon, Cyclohexanon, Toluol, Acetonitril, Essigester oder Methanol eine Lösung oder eine Dispersion und setzt gegebenenfalls ein Bindemittel zu. Als Bindemittel kommen durch Strahlung oder Wärme härtbare Harze, z.B. Photopolymere, Silikonharze sowie Epoxidharze oder thermoplastische Kunststoffe in Frage.

Bevorzugt sind thermoplastische Kunststoffe, die keinen oder nur einen sehr geringen kristallinen Anteil aufweisen, mit Glastemperaturen von >35° C, insbesondere >75° C. Darüber hinaus ist es für homogene Schichten von Vorteil, wenn die Bindemittel wie Harze oder thermoplastische Kunststoffe mit den erfindungsgemäßen Farbstoffen gut verträglich sind. Geeignet sind beispielsweise wasserunlösliche Bindemittel mit hohem Lösungsvermögen für die erfindungsgemäßen Farbstoffe, wie (Meth)Acrylatpolymere und -copolymere, Polystyrolmono- und -copolymerisate, Polyvinylcarbazol, Polyvinylheteropolymere, Polyvinylchlorid und Celluloseester.

Die durch Schleudern, Rakeln oder Tauchen auf ein vorher gereinigtes Substrat aufgebrachte Zubereitung wird dann an der Luft getrocknet.

Im Falle des bevorzugten Spin-Coating-Verfahrens wird Farbstoffzubereitung auf die Platte gebracht und diese mit Geschwindigkeiten zwischen 200 und 2000 Upm in Rotation versetzt. Dabei verteilt sich die Lösung auf der Platte und bildet nach Verdampfen des Lösungsmittels eine feste Schicht. Die Dicke der Schicht ist von mehreren Faktoren abhängig und kann durch Variation der Rotationsgeschwindigkeit, des Lösungsmittels, der Farbstoffkonzentration im Lösemittel und/oder des Bindemittels variiert werden und reproduzierbar eingestellt werden.

Die folgenden Beispiele sollen die Erfindung zusätzlich erläutern.

Beispiel 1

a) Es wurde eine Lösung aus 0,1 g des Farbstoffs VI. 6 in 15 ml Methylethylketon hergestellt und diese auf eine PMMA-Platte aufzentrifugiert. Nach dem Trocknen an der Luft und anschließend bei Raumtemperatur im Vakuum wurde ein gleichmäßiger Film ohne Pinholes von ca. 500 nm Dicke erhalten. Auf diese Farbschicht wurde im Vakuum eine Reflektorschicht aus Aluminium von ca. 30 nm Dicke aufgedampft.

b) Der so erhaltene mit 800 Upm rotierende Aufzeichnungsträger wurde durch das Substrat mit Lichtpulsen eines zur Informationsaufzeichnung geeigneten Lasers mit einer Intensität von 5 mW einer Dauer von 20 nsec bestrahlt, wobei die Strahlung auf einen Brennfleck von 1,0 $\mu$m $\phi$ fokussiert war. Die hierdurch eingestrahlte Energie von 0,1 nJ je Puls reichte aus, um je Puls ein Loch von 1 bis 1,3 $\mu$m $\phi$ zu erzeugen.

Zur Wiedergabe wurde ein nicht modulierter, in der gleichen Weise fokussierter Strahl eines Halbleiter-Lasers, der durch Filter auf 1 mW abgeschwächt wurde, über die beschriebenen Stellen des Aufzeichnungsmediums geführt und das vom Medium reflektierte Licht mit einem Fotodetektor gemessen. Mit Hilfe des Fotodetektors wurde festgestellt, daß sich die Reflexion an einer vorher beschriebenen Stelle deutlich von einer unbeschriebenen Stelle unterscheidet.

Beispiel 2 bis 7

Entsprechend den Angaben von Beispiel 1 wurde auf PMMA Platten eine Lösung bzw. eine ultrafeine Dispersion des Farbstoffs in Methylethylketon aufgeschleudert und nach dem Trocknen die Farbstoffschicht mit Aluminium bedampft. Es wurden folgende Farbstoffe verwendet.

Tabelle 4

| Beispiel | Farbstoff der Formel | Dicke der Aufzeichnungsschicht (nm) |
|---|---|---|
| 2 | III. 2 | 50 |
| 3 | III. 9 | 60 |
| 4 | III. 14 | 60 |
| 5 | IV. 6 | 50 |
| 6 | IV. 10 | 65 |
| 7 | V. 9 | 80 |

Beispiel 8

Auf einen Glasträger wurde im Vakuum Aluminium als Reflektor-Schicht (Dicke: 50 nm) aufgedampft. Eine Lösung aus 0,1 g des Farbstoffs IV. 6 und 0,2 g PMMA in 15 ml Methylethylketon wurde auf den verspiegelten Glasträger aufgeschleudert und die Farbstoffschicht zunächst an der Luft und dann im Vakuum bei Raumtemperatur getrocknet. Es wurde eine Schichtdicke von ca. 75 nm erhalten.

In die Schicht konnten entsprechend Beispiel 1 mit einem geeigneten Laser mit einer Energie von 0,1 nJ Signale eingeschrieben werden.

Beispiel 9

Auf einen Polycarbonat-Träger wurde im Vakuum Zinn als Reflektor-Schicht (Dicke: 60 nm) aufgedampft. Eine Dispersion aus 0,1 g des Farbstoffs IX (M = Vo) und 0,02 g PMMA in 20 ml Methylethylketon wurde auf den verspiegelten Träger aufgebracht und die Farbstoffschicht zunächst an der Luft und dann in Vakuum bei Raumtemperatur getrocknet. Es wurde eine Schichtdicke von ca. 75 mm erhalten.

In die Schicht konnte entsprechend Beispiel 1 mit einem Laser mit einer Energie von ca. 1,2 nJ Signale eingeschrieben werden.

**Patentansprüche**

**1.** Optisches Aufzeichnungsmedium aus einem Träger und einer lichtabsorbierenden Schicht, dadurch gekennzeichnet, daß die lichtabsorbierende Schicht aus mindestens einem Farbmittel der Formel I

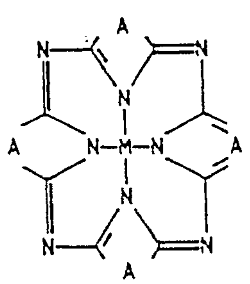

I

besteht oder mindestens ein Farbmittel der Formel I enthält, in der

M für zwei wasserstoffatome, für Fe, Cu, Co, Ni, Pb, Cr, Mn, VO, TiO, ZrO, Nb, Ta, Pd, $SiCl_2$, Sn oder $SnX_2$, worin X Cl, Br oder J bedeuten, steht und

A einen bivalenten Rest der Formel II

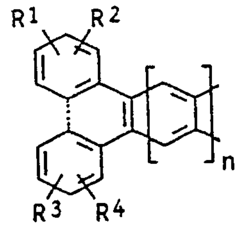

II

bezeichnet, in der die punktierte Linie keine oder eine Bindung bedeutet, n die Werte 0 oder 1 annehmen kann,

$R^1$, $R^2$, $R^3$ und $R^4$ für den Fall, daß n den Wert 0 annimmt, Wasserstoff, $C_1$-$C_{12}$-Alkyl, Trifluormethyl, Butoxy, $C_1$-$C_{12}$-Alkylthio, Phenyloxy, Phenylthio, Fluor, Chlor, Brom, Nitro, Amino, Mono-$C_1$-$C_{12}$-alkylamino, Di-$C_1$-$C_{12}$-alkylamino, $-SiR_3$ oder $-SnR_3$, worin R für $C_1$-$C_8$-Alkyl steht, sowie

$R^1$, $R^2$, $R^3$ und $R^4$ für den Fall, daß n den Wert 1 annimmt und die punktierte Linie keine Bindung bedeutet, Wasserstoff, $C_1$-$C_{12}$-Alkyl, gegebenenfalls durch Alkoxy substituiertes Phenyl, $C_1$-$C_{12}$-Alkoxy, Fluor, Chlor, Brom, Amino, Mono-$C_1$-$C_{12}$-alkyl-aminooder Di-$C_1$-$C_{12}$-alkylamino bedeuten,

und für den Fall, daß den den Wert 1 annimmt und die punktierte Linie eine Bindung bedeutet,

$R^1$ und $R^3$ die letztgenannte Bedeutung besitzen und

$R^2$ und $R^4$ für Wasserstoff stehen.

2. Optisches Aufzeichnungsmedium nach Anspruch 1, dadurch gekennzeichnet, daß M für V0, TiO, ZrO, Pb, Mn, Co, Cu oder Sn steht.

3. Optisches Aufzeichnungsmedium nach den Ansprüchen 1 oder 2, dadurch gekennzeichnet, daß dieses ein Farbmittel der Formel III

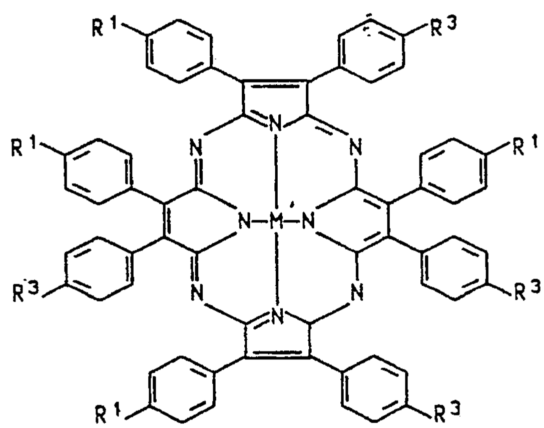

III

enthält, in der $R^1$ und $R^3$ für Wasserstoff, Butyl, Butoxy, Dimethylamino oder Dibutylamino und M' für VO, TiO, Mn oder Pb stehen.

4. Optisches Aufzeichnungsmedium nach den Ansprüchen 1 oder 2, dadurch gekennzeichnet, daß dieses ein Farbmittel der Formel IV

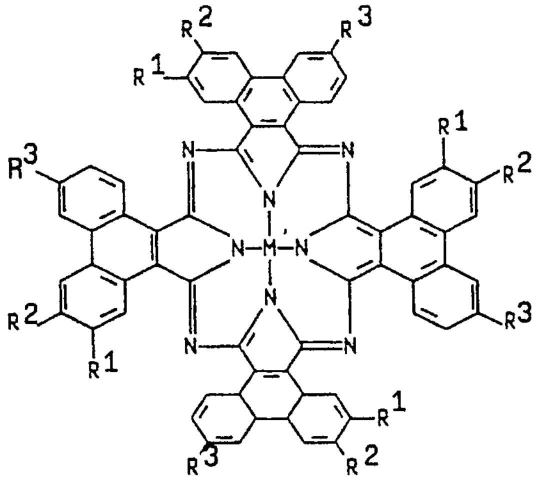

IV

enthält, in der $R^1$ Wasserstoff oder Butyl und $R^2$ und $R^3$ Wasserstoff, Butyl, Butoxy oder Dibutylamino und M' , VO, TiO, Mn oder Pb bedeuten.

5. Optisches Aufzeichnungsmedium nach den Ansprüchen 1 oder 2, dadurch gekennzeichnet, daß dieses ein Farbmittel der Formel V

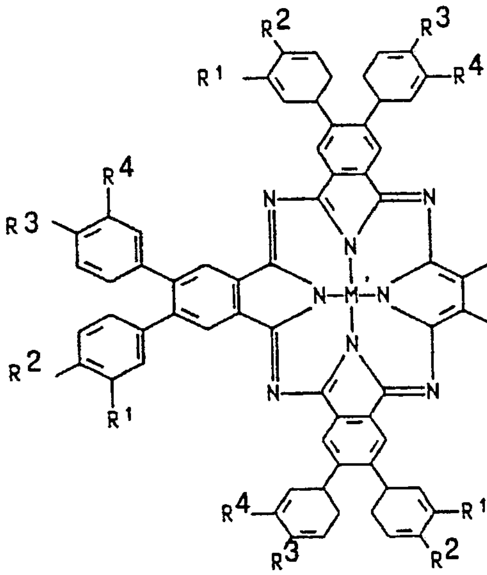

V

enthält, in der $R^1$ und $R^4$ Wasserstoff oder Ethoxy und $R^2$ und $R^3$ Wasserstoff, Butyl, Ethoxy oder Pentoxy und M' VO, TiO, Mn oder Pb bedeuten.

6. Optisches Aufzeichnungsmedium nach den Ansprüchen 1 oder 2, dadurch gekennzeichnet, daß dieses ein Farbmittel der Formel VI

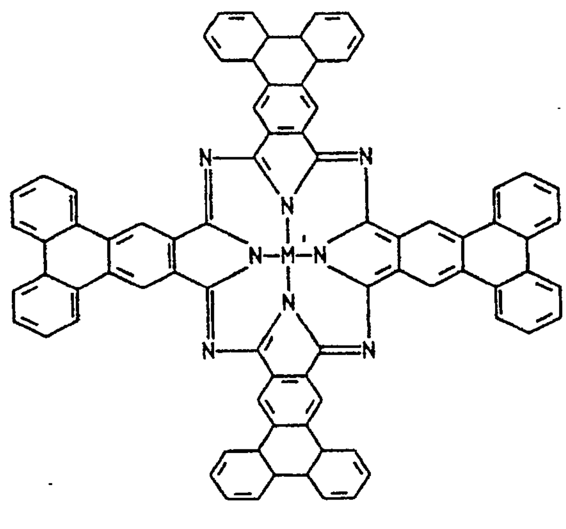

VI

enthält, in der M' VO, Mn, Pb oder TiO bedeutet.

## Claims

1. An optical recording material which consists of a base and a light-absorbing layer and in which the said layer consists of or contains one or more colorants of the formula I

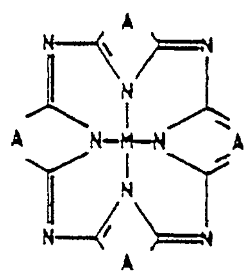

I

where M is two hydrogen atoms or Fe, Cu, Co, Ni, Pb, Cr, Mn, VO, TiO, ZrO, Nb, Ta, Pd, $SiCl_2$, Sn or $SnX_2$, X is Cl, Br or I, and A is a divalent radical of the formula II

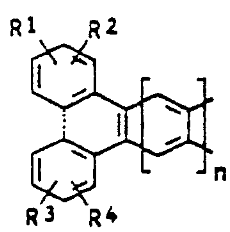

II

where
the dotted line represents a bond or no bond, n may be 0 or 1 and, where n is 0, $R^1$, $R^2$, $R^3$ and $R^4$ are each hydrogen, $C_1$-$C_{12}$-alkyl, trifluoromethyl, butoxy, $C_1$-$C_{12}$-alkylthio, phenoxy, phenylthio, fluorine, chlorine, bromine, nitro, amino, mono-$C_1$-$C_{12}$-alkylamino, di-$C_1$-$C_{12}$ alkylamino, $-SiR_3$ or $-SnR_3$, in which R is $C_1$-$C_8$-alkyl, and, where n is 1, and the dotted line is not a bond, $R^1$, $R^2$, $R^3$ and $R^4$ are each hydrogen, $C_1$-$C_{12}$-alkyl, unsubstituted or alkoxysubstituted phenyl, $C_1$-$C_{12}$-alkoxy, fluorine, chlorine, bromine, amino, mono-$C_1$-$C_{12}$-alkylamino or di-$C_1$-$C_{12}$-alkyl-amino and, where n is 1 and the dotted line is a bond, $R^1$ and $R^3$ have the lastmentioned meanings and $R^2$ and $R^4$ are each hydrogen.

2. An optical recording material as claimed in claim 1, wherein M is VO, TiO, ZrO, Pb, Mn, Co, Cu or Sn.

3. An optical recording material as claimed in claim 1 or 2, which contains a colorant of the formula III

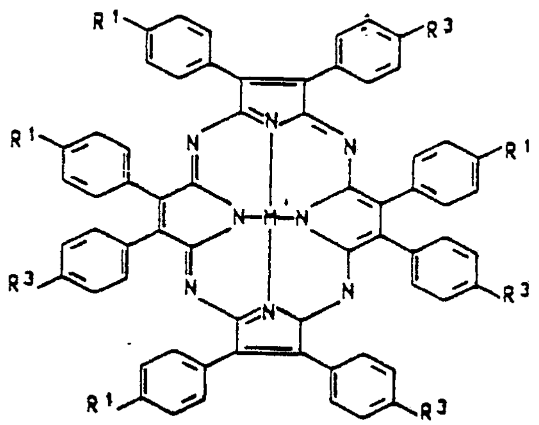

III

where $R^1$ and $R^3$ are each hydrogen, butyl, butoxy, dimethylamino or dibutylamino and M' is VO, TiO, Mn or Pb.

4. An optical recording material as claimed in claim 1 or 2, which contains a colorant of the formula IV

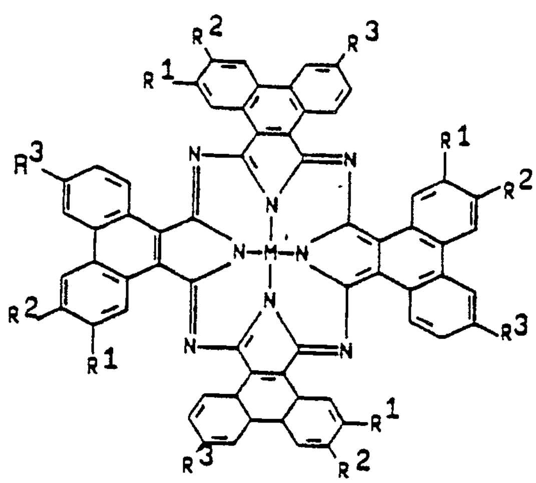

IV

where $R^1$ is hydrogen or butyl, $R^2$ and $R^3$ are each hydrogen, butyl, butoxy or dibutylamino and M' is VO, TiO, Mn or Pb.

5. An optical recording material as claimed in claim 1 or 2, which contains a colorant of the formula V

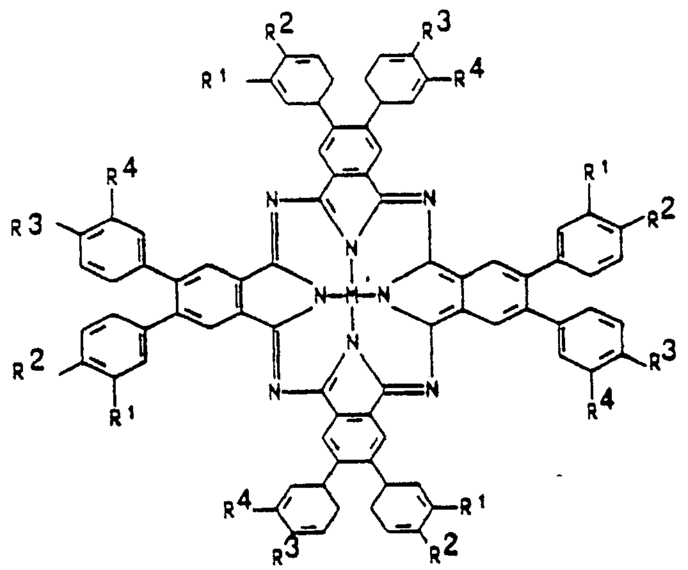

V

where $R^1$ and $R^4$ are each hydrogen or ethoxy, $R^2$ and $R^3$ are each hydrogen, butyl, ethoxy or pentyloxy and M' is VO, TiO, Mn or Pb.

6. An optical recording material as claimed in claim 1 or 2, which contains a colorant of the formula VI

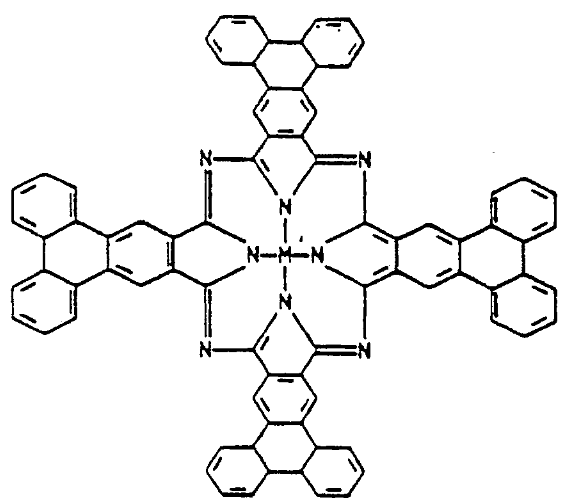

VI

where M' is VO, Mn, Pb or TiO.

## Revendications

1. Milieu d'enregistrement optique composé d'un support et d'une couche absorbant la lumière, caractérisé en ce que la couche absorbant la lumière est constituée d'au moins un colorant de formule I

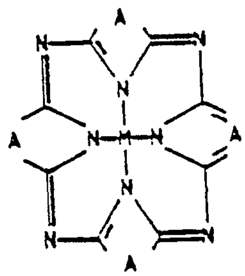

I

ou contient au moins un colorant de formule I, dans laquelle

M est mis pour deux atomes d'hydrogène ou pour Fe, Cu, Co, Ni, Pb, Cr, Mn, VO, TiO, ZrO, Nb, Ta, Pd, $SiCl_2$, Sn ou $SnX_2$ où X représente Cl, Br ou I et

A représente un reste bivalent de formule II

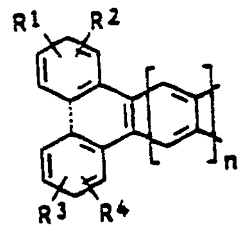

II

dans laquelle

le trait en pointillés représente une ou pas de liaison, n peut prendre les valeurs 0 ou 1,

$R^1$, $R^2$, $R^3$, et $R^4$ dans le cas où n prend la valeur 0, représentent des radicaux hydrogène, alkyle en $C_1$-$C_{12}$, trifluorométhyle, butoxy, alkylthio en $C_1$-$C_{12}$, phényloxy, phénylthio, fluoro, chloro, bromo, nitro, amino, monoalkylamino en $C_1$-$C_{12}$, di-(alkyl en $C_1$-$C_{12}$)amino, $-SiR_3$ ou $-SnR_3$ où R est mis pour un reste alkyle en $C_1$-$C_8$, ou bien

$R_1$, $R_2$, $R_3$ et $R_4$ dans le cas où n prend la valeur 1 et le trait en pointillé ne représente pas de liaison, représentent des radicaux hydrogène, alkyle en $C_1$-$C_{12}$, phényle éventuellement substitué par des restes alcoxy, alcoxy en $C_1$-$C_{12}$, fluoro, chloro, bromo, amino, monoalkylamino en $C_1$-$C_{12}$ ou di(alkyl en $C_1$-$C_{12}$)amino,

et dans le cas où n prend la valeur 1 et le trait en pointillé représente une liaison

$R_1$ et $R_3$ ont la signification donnée précédemment et

$R_2$ et $R_4$ sont mis pour des atomes d'hydrogène.

**2.** Milieu d'enregistrement optique selon la revendication 1, caractérisé en ce que M est mis pour VO, TiO, ZrO, Pb, Mn, Co, Cu ou Sn.

**3.** Milieu d'enregistrement optique selon la revendication 2, caractérisé en ce qu'il contient un colorant de formule III

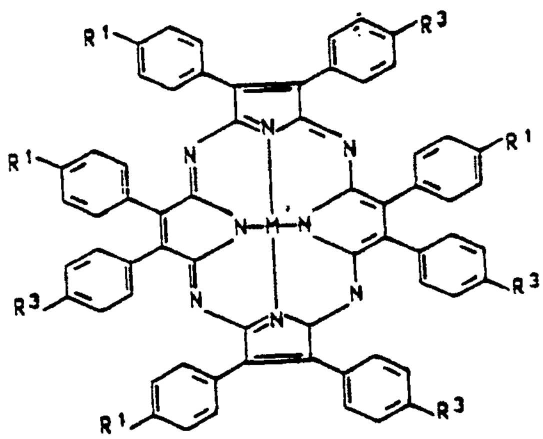

III

dans laquelle $R^1$ et $R^3$ sont mis pour des radicaux hydrogène, butyle, butoxy, diméthylamino ou dibutylamino et M' pour VO, TiO, Mn ou Pb.

4. Milieu d'enregistrement optique selon la revendication 1 ou 2, caractérise en ce qu' il contient un colorant de formule IV

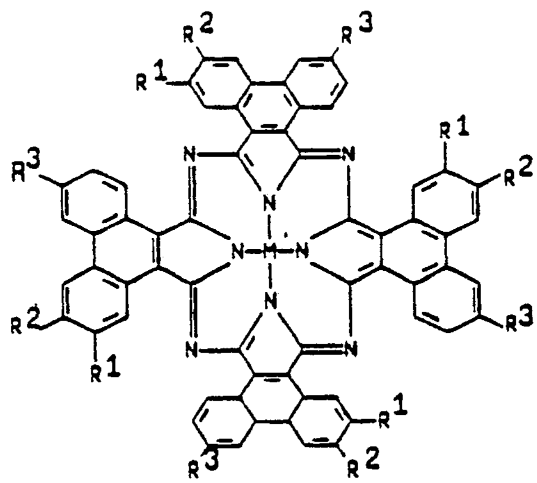

IV

dans laquelle $R^1$ est mis pour un atome d'hydrogène ou un groupement butyle et $R^2$ et $R^3$ pour des atomes d'hydrogène ou des groupements butyle, butoxy ou dibutylamino et M' représente VO, TiO, Mn ou Pb.

5. Milieu d'enregistrement optique selon la revendication 1 ou 2, caractérisé en ce qu' il contient un colorant de formule V

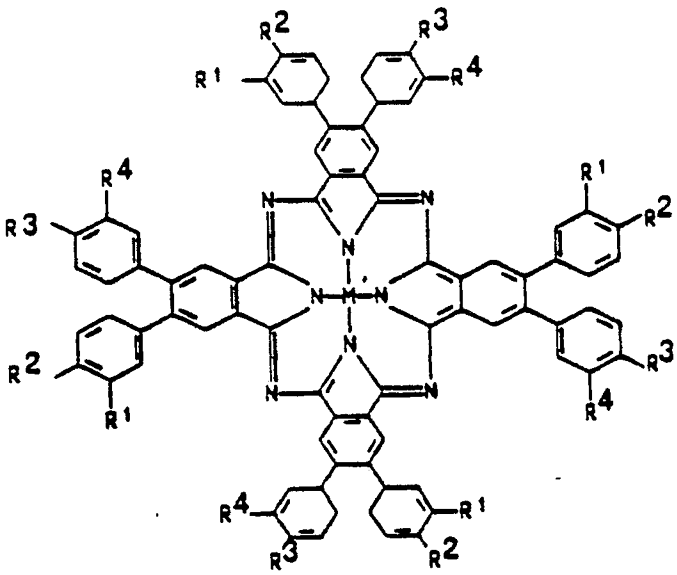

V

dans laquelle $R^1$ et $R^4$ représentent des atomes d'hydrogène ou des groupements éthoxy et $R^2$ et $R^3$ des atomes d'hydrogène ou des groupements butyle, éthoxy ou pentyloxy et M' est mis pour VO, TiO, Mn ou Pb.

6. Milieu d'enregistrement optique selon la revendication 1 ou 2, caractérisé en ce qu'il contient un colorant de formule VI

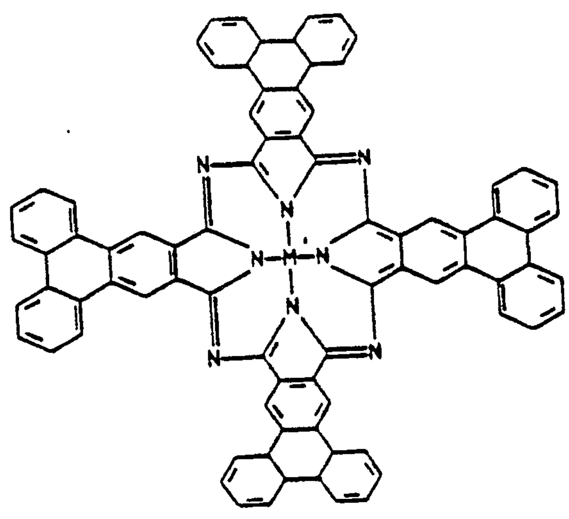

VI

dans laquelle M' représente VO, Mn, Pb ou TiO.